# EUROPEAN PATENT APPLICATION

(11) **EP 4 629 697 A1**
(43) Date of publication of application: **08.10.2025**
(21) Application number: 25168602.8
(22) Date of filing: 04.04.2025
(51) Int. Cl.: H04W 36/30, H04W 48/18

(54) **WIRELESS NETWORK SLICE USAGE BASED ON RADIO SIGNAL LEVELS**

(30) Priority: 05.04.2024 US 202418628327
(71) Applicant: T MOBILE INNOVATIONS LLC, Overland Park KS 66251-2100 (US)
(72) Inventor: SOMASHEKAR, Sharath, Overland Park, 66251 (US); ROBERTS, Michael Aaron, Overland Park, 66251 (US); PATIL, Tejaswini Shivabasanagouda, Overland Park, 66251 (US)
(74) Representative: Suddaby, Mark Edward

(57) **Abstract**

A data communication system selects an original wireless network slice for a wireless communication device. The data communication system identifies one or more radio signal parameters for the original wireless network slice. The data communication system determines one or more radio signal levels for the wireless communication device. The data communication system selects a different wireless network slice for the wireless communication device in response to the one or more radio signal parameters for the original wireless network slice and the one or more radio signal levels for the wireless communication device.

## Description

### TECHNICAL BACKGROUND

Wireless communication networks provide wireless data services to wireless communication devices like phones, computers, and other user devices. The wireless data services may include internet-access, data messaging, video conferencing, or some other data communication product. The wireless communication networks comprise wireless access nodes like Wireless Fidelity (WIFI) hotspots, Fifth Generation New Radio (5GNR) cell towers, and satellites in earth orbit. The wireless communication networks further comprise network elements the process network signaling and handle user data like Access and Mobility Management Functions (AMFs) and User Plane Functions (UPFs).

The wireless communication devices detect radio signal levels like Reference Signal Received Power (RSRP) and Signal-to-Noise Ratio (SNR). The SNR parameters may comprise Signal-to-Noise and Interference Ratio (SINR) parameters. The wireless communication devices transfer the measured radio signal levels to the wireless access nodes to perform device handovers between the wireless access nodes. For example, when a wireless communication device reports that a target access node has a significantly better RSRP than the source access node, the source access node handsover the wireless communication device to the target access node.

Wireless network slices comprise network elements like UPFs that are customized for specific user applications and network services. The wireless communication devices request the specific wireless network slice for their current user application and associated network service. The wireless communication networks then deliver this network service to the user application using the requested wireless network slice. For example, a wireless communication device may use a low-latency wireless network slice to serve a low-latency user application like an augmented-reality display.

The wireless communication networks may use wireless network slices to serve wireless communication devices even when their wireless communications with the wireless access nodes is difficult due to distance, interference, and the like. In some instances, the wireless communication networks may fail to effectively use the radio signal levels to control the use of the wireless network slices. Moreover, the wireless communication networks may fail to efficiently handover the wireless communication devices between the wireless network slices.

### TECHNICAL OVERVIEW

In some examples, an original wireless network slice is selected for a wireless communication device. One or more radio signal parameters are identified for the original wireless network slice. One or more radio signal levels are determined for the wireless communication device. A different wireless network slice is selected for the wireless communication device in response to the one or more radio signal parameters for the original wireless network slice and the one or more radio signal levels for the wireless communication device.

In some examples, a data communication system comprises a network control system and a radio communication system. The network control system selects an original wireless network slice for a wireless communication device. The network control system identifies one or more radio signal parameters for the original wireless network slice. The radio communication system determines one or more radio signal levels for the wireless communication device. The network control system selects a different wireless network slice for the wireless communication device in response to the one or more radio signal parameters for the original wireless network slice and the one or more radio signal levels for the wireless communication device.

In some examples, a data communication system comprises a network control system and a radio communication system. The network control system selects an original wireless network slice for a wireless communication device. The network control system identifies one or more radio signal parameters for the original wireless network slice. The radio communication system determines one or more radio signal levels for the wireless communication device. The network control system selects a different wireless network slice for the wireless communication device in response to the one or more radio signal parameters for the original wireless network slice and the one or more radio signal levels for the wireless communication device.

### DESCRIPTION OF THE DRAWINGS

Figure 1 illustrates an exemplary data communication system to use wireless network slices based on radio signal levels.
Figure 2 illustrates an exemplary operation of the data communication system to use the wireless network slices based on the radio signal levels.
Figure 3 illustrates an exemplary operation of the data communication system to use the wireless network slices based on the radio signal levels.
Figure 4 illustrates exemplary processing circuitry to use wireless network slices based on radio signal levels.
Figure 5 illustrates an exemplary wireless communication network that uses wireless network slices based on radio signal levels.
Figure 6 illustrates an exemplary UE in the wireless communication network that uses the wireless network slices based on the radio signal levels.
Figure 7 illustrates an exemplary Fifth Generation New Radio (5GNR) access node in the wireless communication network that uses the wireless network slices based on the radio signal levels.
Figure 8 illustrates an exemplary Wireless Fidelity (WIFI) access node in the wireless communication network that uses the wireless network slices based on the radio signal levels.
Figure 9 illustrates an exemplary satellite access node and ground station in the wireless communication network that uses the wireless network slices based on the radio signal levels.
Figure 10 illustrates an exemplary Network Function Virtualization Infrastructure (NFVI) in the wireless communication network that uses the wireless network slices based on the radio signal levels.
Figure 11 illustrates an exemplary operation of the wireless communication network that uses the wireless network slices based on the radio signal levels.
Figure 12 illustrates an alternative exemplary operation of the wireless communication network that uses the wireless network slices based on the radio signal levels.

### DETAILED DESCRIPTION

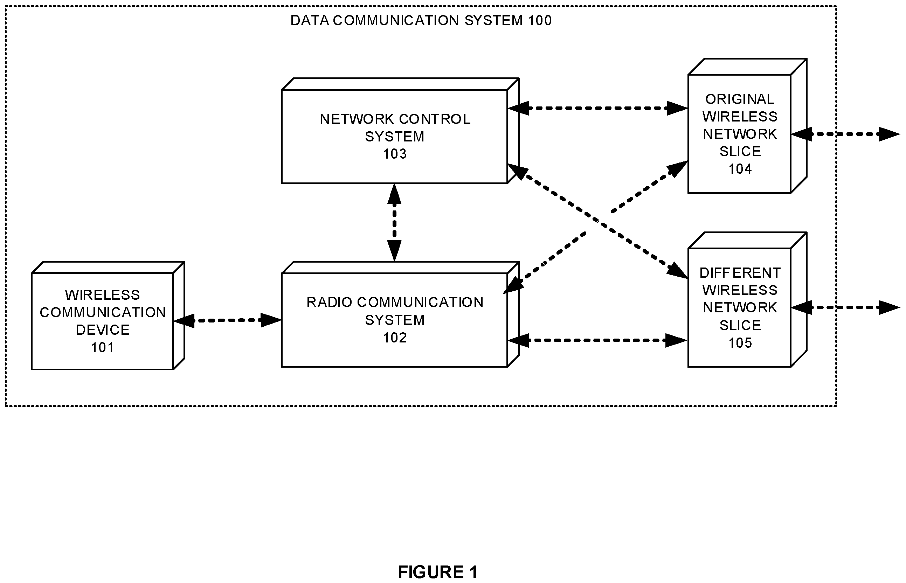

Figure 1 illustrates exemplary data communication system 100 that uses wireless network slices 104-105 based on radio signal levels. Data communication system 100 comprises wireless communication device 101, radio communication system 102, network control system 103, original wireless network slice 104, and different wireless network slice 105. Wireless network slices 104-105 deliver data communication service to wireless communication device 101.

In some examples, network control system 103 selects original wireless network slice 104 for wireless communication device 101. For example, wireless communication device 101 may launch a user application that drives wireless communication device 101 to request original wireless network slice 104 from network control system 103 to support the user application. Network control system 103 identifies one or more radio signal parameters for original wireless network slice 104. The radio signal parameters comprise Reference Signal Received Power (RSRP) parameters, Signal-to-Noise Ratio (SNR) parameters, data throughput parameters, and/or some other radio communication characteristic. The SNR parameters may comprise Signal-to-Noise and Interference Ratio (SINR) parameters. Radio communication system 102 determines one or more radio signal levels for wireless communication device 101. The radio signal levels comprise RSRP levels, SNR levels, data throughput levels, and/or some other radio communication metric. Network control system 103 selects different wireless network slice 105 for wireless communication device 101 in response to the one or more radio signal parameters for original wireless network slice 104 and the one or more radio signal levels for wireless communication device 101. For example, a SNR level for wireless communication device 101 may fall below the SNR parameter for using original wireless network slice 104.

In some examples, radio communication system 102 determines one or more subsequent radio signal levels for wireless communication device 101. Network control system 103 re-selects original wireless network slice 104 for wireless communication device 101 in response to the one or more radio signal parameters for original wireless network slice 104 and the one or more subsequent radio signal levels for wireless communication device 101. For example, the SNR level for wireless communication device 101 may now meet or exceed the SNR parameter for using original wireless network slice 104.

In some examples, network control system 103 may identify the one or more radio signal parameters for original wireless network slice 104 by identifying the one or more radio signal parameters for a first Radio Access Technology (RAT). Radio communication system 102 may determine the one or more radio signal levels for wireless communication device 101 by determining the one or more radio signal levels for the first RAT. Network control system 103 could select different wireless network slice 105 for wireless communication device 101 by selecting second RAT that is different from the first RAT.

In some examples, network control system 103 comprises a Radio Resource Controller (RRC). Radio communication system 102 might comprise a Physical Layer (PHY). Radio communication system 102 and network control system 103 may comprise a Fifth Generation New Radio (5GNR) access node, Wireless Fidelity (WIFI) access node, satellite-based access node, and/or some other type of wireless access node.

In some examples, wireless communication device 101 selects original wireless network slice 104 - typically to support an activated user application. Wireless communication device 101 identifies one or more radio signal parameters for original wireless network slice 104 like RSRP, SNR, data throughput, and/or some other radio communication characteristic. wireless communication device 101 determines one or more radio signal levels. The radio signal levels comprise RSRP levels, SNR levels, data throughput levels, and/or some other radio communication metric. Wireless communication device 101 selects different wireless network slice 105 in response to the one or more radio signal parameters for original wireless network slice 104 and the one or more radio signal levels for wireless communication device 101. For example, an RSRP level for wireless communication device 101 may fall below the RSRP parameter for using original wireless network slice 104.

In some examples, wireless communication device 101 determines one or more subsequent radio signal levels. Wireless communication device 101 re-selects original wireless network slice 104 in response to the one or more radio signal parameters for original wireless network slice 104 and the one or more subsequent radio signal levels for wireless communication device 101. For example, an RSRP level for wireless communication device 101 may now meet or exceed the RSRP parameter for using original wireless network slice 104.

In some examples, wireless communication device 101 may identify the one or more radio signal parameters for original wireless network slice 104 by identifying one or more radio signal parameters for a first RAT. Wireless communication device 101 may determine the one or more radio signal levels for wireless communication device 101 by determining one or more radio signal levels for the first RAT. Wireless communication device 101 selects different wireless network slice 105 and selects a second RAT that is different from the first RAT.

In some examples, Wireless communication device 101 comprises a Radio Resource Controller (RRC). Wireless communication device 101 might comprise a Physical Layer (PHY). Wireless communication device 101 may comprise a 5GNR device, WIFI device, satellite-based device, and/or some other type of wireless user apparatus.

Wireless communication device 101 comprises communication equipment that is operated by a user like phones, computers, and/or some other data communication apparatus. Network control system 103 comprises one or more network elements that control the delivery of wireless communication services to wireless communication device 101. Radio communication system 102 comprises one or more network elements that deliver a wireless communication service to wireless communication device 101. Wireless network slices 104-105 comprise one or more network elements that deliver a communication service to wireless communication device 101 over radio communication system 102 under the control of network control system 103. Wireless network slices 104-105 comprise Session Management Functions (SMFs), User Plane Functions (UPFs), Application Servers (AS), and/or some other network elements.

Wireless communication device 101 and radio communication system 102 wirelessly communicate using wireless protocols like Wireless Fidelity (WIFI), Fifth Generation New Radio (5GNR), Long Term Evolution (LTE), Low-Power Wide Area Network (LP-WAN), Near-Field Communications (NFC), Code Division Multiple Access (CDMA), Frequency Division Multiple Access (FDMA), Time Division Multiple Access (TDMA), and satellite data communications. Wireless communication device 101, systems 101-102, and slices 104-105 comprise microprocessors, software, memories, transceivers, bus circuitry, and/or some other data processing components. The microprocessors comprise Digital Signal Processors (DSP), Central Processing Units (CPU), Graphical Processing Units (GPU), Application-Specific Integrated Circuits (ASIC), and/or some other data processing hardware. The memories comprise Random Access Memory (RAM), flash circuitry, disk drives, and/or some other type of data storage. The memories store software like operating systems, utilities, protocols, applications, and functions. The microprocessors retrieve the software from the memories and execute the software to drive the operation of data communication system 100 as described herein.

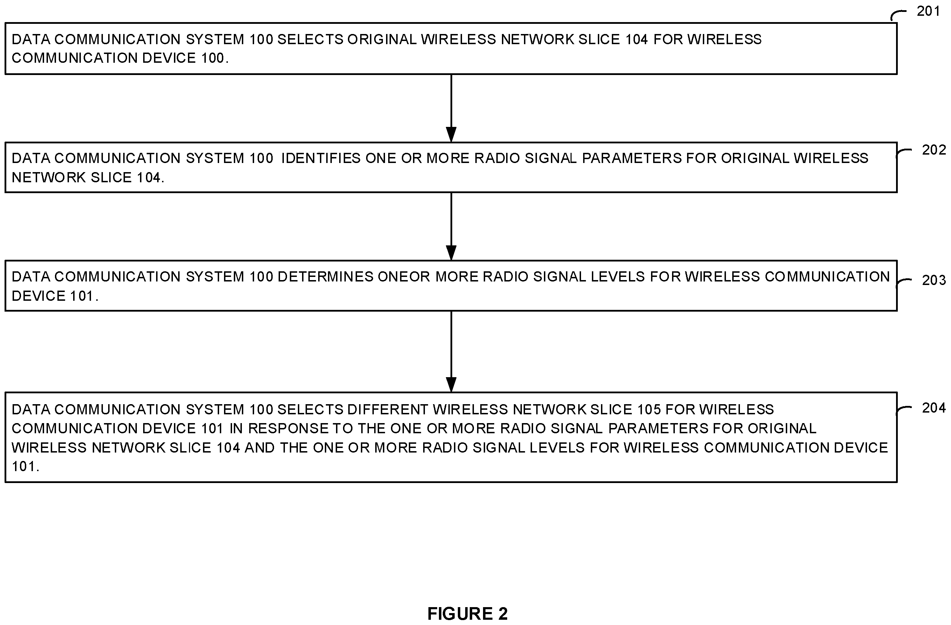

Figure 2 illustrates an exemplary operation of data communication system 100 to use wireless network slices 104-105 based on radio signal levels. The operation may differ in other examples. Data communication system 100 selects original wireless network slice 104 for wireless communication device 101 (201). Data communication system 100 identifies one or more radio signal parameters for original wireless network slice 104 (202). Data communication system 100 determines one or more radio signal levels for wireless communication device 101 (203). Data communication system 100 selects different wireless network slice 105 for wireless communication device 101 in response to the one or more radio signal parameters for original wireless network slice 104 and the one or more radio signal levels for wireless communication device 101 (204). For example, different wireless network slice 105 may be selected for wireless communication device 101 when one or more radio signal levels fall below, meet, or exceed one or more corresponding radio signal parameters. In another example, original wireless network slice 104 may be once again selected for the wireless communication device 101 when one or more subsequent radio signal levels determined for the wireless communication device 101 fall below, meet, or exceed the one or more corresponding radio signal parameters or one or more other corresponding radio signal parameters identified for the original wireless network slice 104.

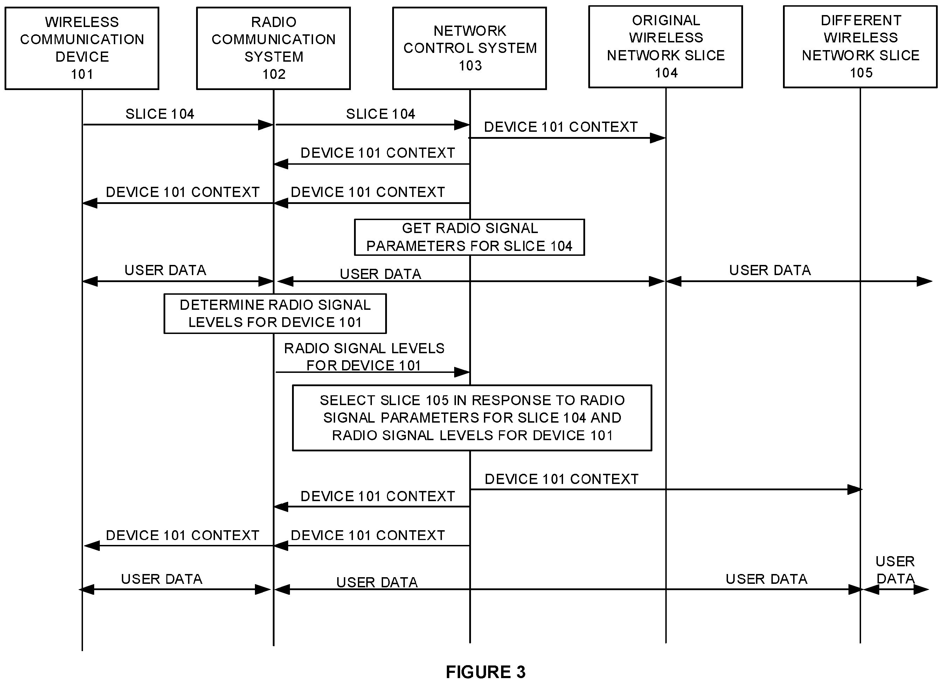

Figure 3 illustrates an exemplary operation of data communication system 100 to use wireless network slices 104-105 based on radio signal levels. The operation may differ in other examples. Wireless communication device 101 requests original wireless network slice 104 from network control system 103 over radio communication system 102. Network control system 103 selects original wireless network slice 104 for wireless communication device 101 and develops context for wireless communication device 101. The context comprises network addresses, quality-of-service levels, and the like. Network control system 103 transfers the context for wireless communication device 101 to original wireless network slice 104, radio communication system 102, and wireless user device 101. Network control system 103 gets radio signal parameters for original wireless network slice 104. Wireless communication device 101 exchanges user data with an external data system (not shown) over radio communication system 102 and original wireless network slice 104.

Radio communication system 102 determines radio signal levels for wireless communication device 101 and indicates the radio signal levels for wireless communication device 101 to network control system 103. Network control system 103 selects different wireless network slice 105 for wireless communication device 101 in response to the radio signal parameters for original wireless network slice 104 and the radio signal levels for wireless communication device 101. For example, an RSRP level for wireless communication device 101 may fall below the RSRP parameter for original wireless network slice 104. Network control system 103 develops new context for wireless communication device 101. Network control system 103 transfers the new context for wireless communication device 101 to different wireless network slice 105, radio communication system 102, and wireless user device 101. Wireless communication device 101 exchanges user data with an external data system (not shown) over radio communication system 102 and different wireless network slice 105.

Advantageously, data communication system 100 effectively uses the radio signal levels to control the use of wireless network slices 104-105. Moreover, data communication system 100 efficiently handsover wireless communication device 101 between wireless network slices 104-105.

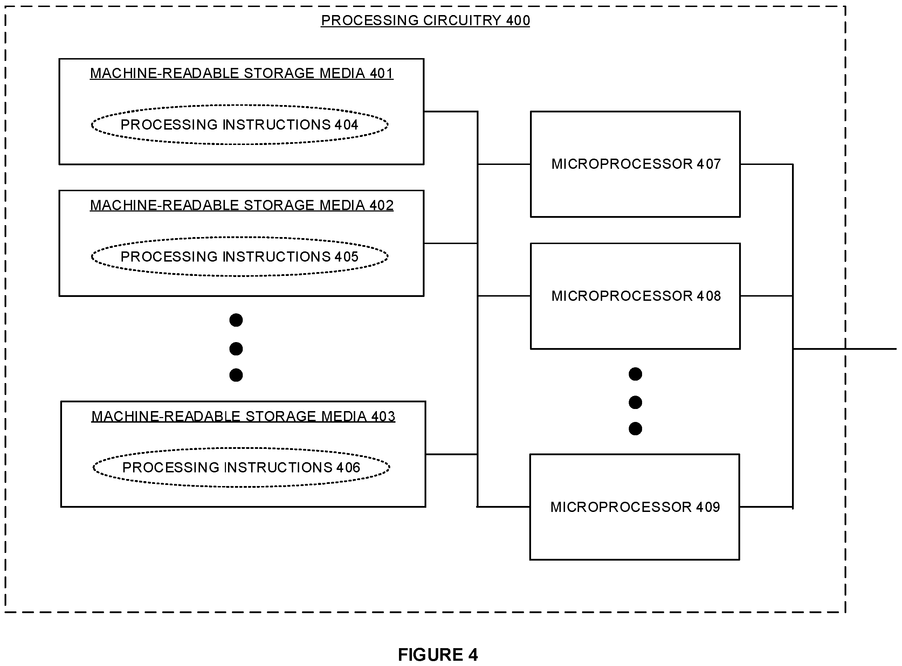

Figure 4 illustrates exemplary processing circuitry 400 to use wireless network slices based on radio signal levels. Processing circuitry 400 comprises an example of wireless communication devices 101-103, control circuitry 104, communication circuitry 105 and network slice 106, although devices 101-103, circuitry 104-105, and slice 106 may differ. Processing circuitry 400 comprises machine-readable storage media 401-403 and microprocessors 407-409 that are communicatively coupled. Machine-readable storage media 401-403 store processing instructions 404-406 in a non-transitory manner. Microprocessors 407-409 comprise DSPs, CPUs, GPUs, ASICs, and/or some other data processing hardware. Machine-readable storage media 401-403 comprises RAM, flash circuitry, disk drives, and/or some other type of data storage apparatus. Microprocessors 407-409 retrieve processing instructions 404-406 from non-transitory machine-readable storage media 401-403. Microprocessors 407-409 execute processing instructions 404-406 to use wireless network slices 104-105 based on radio signal levels as described above for data communication system 100 and as described below for wireless communication network 500. The amount of storage media, microprocessors, processing instructions that are shown in Figure 4 may vary in other examples.

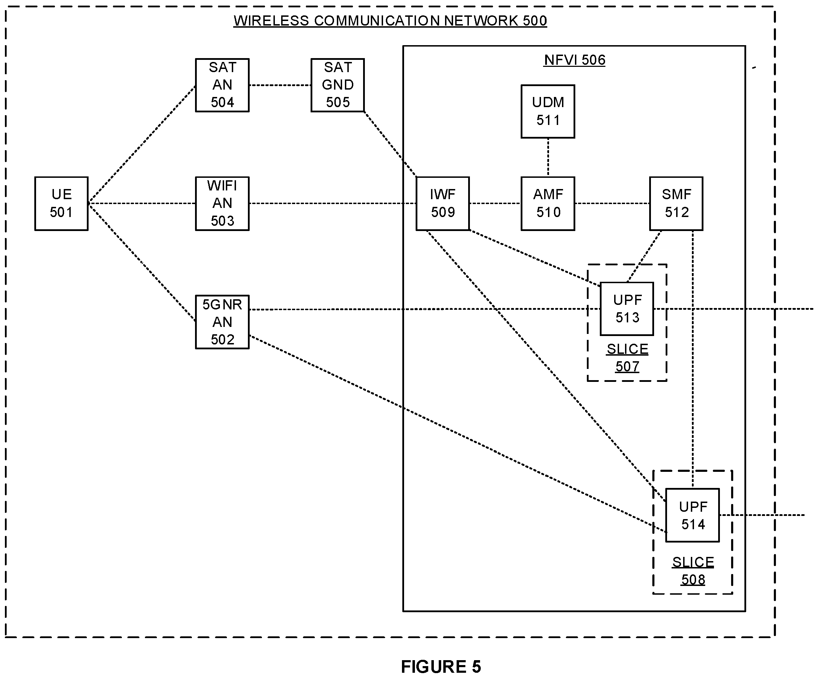

Figure 5 illustrates exemplary wireless communication network 500 that uses wireless network slices 507-508 based on radio signal levels. Wireless communication network 500 comprises an example of data communication system 100 and processing circuitry 400, although system 100 and circuitry 400 may differ. Wireless communication system 500 comprises User Equipment (UE) 501, Fifth Generation New Radio (5GNR) Access Node (AN) 502, Wireless Fidelity (WIFI) AN 503, Satellite (SAT) AN 504, Satellite Ground Station (SAT GND) 505, and Network Function Virtualization Infrastructure (NFVI) 506. NFVI 506 comprises wireless network slices 507-508, Interworking Function (IWF) 509, Access and Mobility Management Function (AMF) 510, Unified Data Management (UDM) 511, and Session Management Function (SMF) 512. Wireless network slice 507 comprises User Plane Function (UPF) 513. Wireless network slice 508 comprises UPF 514.

5GNR AN 502 typically hosts radio signal rules and parameters for wireless network slice 507 in an internal data structure. The radio signal rules indicates how radio signal levels for UE 501 should be processed to determine if wireless network slice 507 should be used or if wireless network slice 508 should be used. The radio signal parameters indicate thresholds like RSRP, SNR, and data throughput thresholds that are used to implement the radio signal rules. For example, a radio signal rule may direct 5GNR AN 502 to compare a SNR level measured by UE 501 to a SNR threshold to determine when wireless network slice 508 should be used instead of wireless network slice 507. UE 501, WIFI AN 503, and SAT AN 504 may also host radio signal rules and parameters for wireless network slice 507. UDM 511 may host radio signal rules and parameters for wireless network slice 507 that are signaled to UE 501 and ANs 502-504 by AMF 510. Radio signal rules and parameters for wireless network slice 508 could be implemented in a similar manner to those for wireless network slice 507.

In a first example, UE 501 executes an augmented reality application that will use wireless network slice 507. In response, UE 501 requests wireless network slice 507 from AMF 510 over 5GNR AN 502. AMF 510 retrieves UE information for UE 501 from UDM 511. AMF 510 and SMF 512 interact to develop UE context for UE 501 like network addresses and quality-of-service for using wireless network slice 507. SMF 512 transfers some of the UE context to UPF 513 in wireless network slice 507. AMF 510 transfers some of the UE context to 5GNR AN 502. AMF 510 transfers some of the UE context to UE 501 over 5GNR AN 502. 5GNR AN 502 retrieves radio signal rules and parameters for wireless network slice 507 from its internal data structure. In this example, the radio signal rules and parameters drive 5GNR AN 502 to switch from slice 507 to slice 508 and from 5GNR AN 502 to SAT AN 504 when the SNR for 5GNR AN 502 falls below a threshold. Thus, the slice switch in response to SNR level also represents a Radio Access Technology (RAT) switch. In response to the UE context, UE 501 exchanges user data with an augmented reality server (not shown) over 5GNR AN 502 and UPF 513.

UE 501 measures SNR and reports the SNR level to 5GNR AN 502. 5GNR AN 502 applies the SNR level to the SNR threshold per the radio signal rules for wireless network slice 507. 5GNR AN 502 determines that the measured SNR level from UE 501 falls below the SNR threshold for wireless network slice 507, and in response, 5GNR AN 502 signals AMF 510 to switch UE 501 from wireless network slice 507 and 5GNR AN 502 to wireless network slice 508 and SAT AN 504.

AMF 510 and SMF 512 interact to develop UE context for UE 501 like network addresses and quality-of-service for using wireless network slice 508. SMF 512 transfers some of the UE context to UPF 514 in wireless network slice 508. AMF 510 transfers some of the UE context to SAT AN 504 over IWF 509 and SAT GND 505. AMF 510 also transfers some of the UE context to UE 501 over 5GNR AN 502. In response to the UE context, UE 501 exchanges user data with the augmented reality server (not shown) over SAT AN 504, SAT GND 505, IWF 509, and UPF 514.

After switching to wireless network slice 508 and SAT AN 504, UE 501 measures and reports the current SNR level to SAT AN 502. Based on the UE context, SAT AN 504 applies the radio signal rules and parameters for wireless network slice 507. UE 501 measures the SNR for 5GNR AN 502 (or another 5GNR AN) and reports the SNR measurement to SAT AN 504. SAT AN 504 applies the SNR level to the SNR threshold per the radio signal rules for wireless network slice 507. SAT AN 504 determines that the measured SNR level from UE 501 now meets or exceeds the SNR threshold, and in response, SAT AN 504 signals AMF 510 to switch UE 501 from wireless network slice 508 and SAT AN 504 back to wireless network slice 507 and 5GNR AN 502 (or the other 5GNR AN).

To switch back to wireless network slice 507 and 5GNR AN 502 (or the other 5GNR AN), AMF 510 and SMF 512 interact to develop UE context for UE 501 like network addresses and quality-of-service for using wireless network slice 507 and 5GNR AN 502 (or the other 5GNR AN). SMF 512 transfers some of the UE context to UPF 513 in wireless network slice 507. AMF 510 transfers some of the UE context to 5GNR AN 502 (or the other 5GNR AN). AMF 510 also transfers some of the UE context to UE 501 over IWF 509, SAT GND 505, and SAT AN 504. In response to the UE context, UE 501 again exchanges user data with the augmented reality server over 5GNR AN 502 (or the other 5GNR AN) and UPF 513.

In a second example, UE 501 receives the radio signal rules and parameters in the UE context. The radio signal rules and parameters drive UE 501 to switch from slice 507 to slice 508 and from 5GNR AN 502 to SAT AN 504 when the SNR for 5GNR AN 502 falls below a threshold. In response to the UE context, UE 501 exchanges user data with an augmented reality server (not shown) over 5GNR AN 502 and UPF 513. UE 501 measures SNR and applies the SNR level to the SNR threshold per the radio signal rules for wireless network slice 507. UE 501 determines that the measured SNR level from UE 501 falls below the SNR threshold for wireless network slice 507, and in response, UE 501 signals AMF 510 to switch UE 501 from wireless network slice 507 and 5GNR AN 502 to wireless network slice 508 and SAT AN 504. AMF 510 and SMF 512 interact to develop UE context for UE 501 like network addresses and quality-of-service for using wireless network slice 508. SMF 512 transfers some of the UE context to UPF 514 in wireless network slice 508. AMF 510 transfers some of the UE context to SAT AN 504 over IWF 509 and SAT GND 505. AMF 510 also transfers some of the UE context to UE 501 over 5GNR AN 502. In response to the UE context, UE 501 exchanges user data with the augmented reality server (not shown) over SAT AN 504, SAT GND 505, IWF 509, and UPF 514. After switching to wireless network slice 508 and SAT AN 504, UE 501 measures the current SNR level. Based on the UE context, UE 501 applies the radio signal rules and parameters for wireless network slice 507. UE 501 measures the SNR for 5GNR AN 502 (or another 5GNR AN) and applies the SNR level to the SNR threshold per the radio signal rules for wireless network slice 507. UE 501 determines that the measured SNR level now meets or exceeds the SNR threshold, and in response, UE 501 signals AMF 510 to switch UE 501 from wireless network slice 508 and SAT AN 504 back to wireless network slice 507 and 5GNR AN 502 (or the other 5GNR AN). To switch back to wireless network slice 507 and 5GNR AN 502 (or the other 5GNR AN), AMF 510 and SMF 512 interact to develop UE context for UE 501 like network addresses and quality-of-service for using wireless network slice 507 and 5GNR AN 502 (or the other 5GNR AN). SMF 512 transfers some of the UE context to UPF 513 in wireless network slice 507. AMF 510 transfers some of the UE context to 5GNR AN 502 (or the other 5GNR AN). AMF 510 also transfers some of the UE context to UE 501 over IWF 509, SAT GND 505, and SAT AN 504. In response to the UE context, UE 501 again exchanges user data with the augmented reality server over 5GNR AN 502 (or the other 5GNR AN) and UPF 513.

In a third example, UE 501 executes a video-streaming application that will use wireless network slice 507. In response, UE 501 requests wireless network slice 507 from AMF 510 over WIFI AN 503 and IWF 509. AMF 510 retrieves UE information for UE 501 from UDM 511. The UE information includes radio signal rules and parameters for wireless network slice 507. AMF 510 and SMF 512 interact to develop UE context for UE 501 like network addresses, quality-of-service, radio signal rules, and radio signal parameters for using wireless network slice 507. SMF 512 transfers some of the UE context to UPF 513 in wireless network slice 507. AMF 510 transfers some of the UE context to IWF 509. AMF 510 transfers some of the UE context to WIFI AN 502 over IWF 509, and this UE context includes the radio signal rules and parameters for wireless network slice 507. AMF 510 transfers some of the UE context to UE 501 over IWF 509 and WIFI AN 503. In response to the UE context, UE 501 streams video-content from a video server (not shown) over WIFI AN 503, IWF 509, and UPF 513.

WIFI AN 503 measures the downlink data throughput level per the radio signal rules for wireless network slice 507 in the UE context. WIFI AN 503 applies the downlink data throughput level to the downlink data throughput threshold per the radio signal rules. WIFI AN 503 determines that the measured downlink data throughput level for UE 501 falls below the downlink data throughput threshold, and in response, WIFI AN 503 signals AMF 510 over IWF 509 to switch UE 501 from wireless network slice 507 to wireless network slice 508.

AMF 510 and SMF 512 interact to develop UE context for UE 501 like network addresses and quality-of-service for using wireless network slice 508. SMF 512 transfers some of the UE context to UPF 514 in wireless network slice 508. AMF 510 transfers some of the UE context to IWF 509. AMF 510 transfers some of the UE context to WIFI AN 503 over IWF 509. AMF 510 also transfers some of the UE context to UE 501 over IWF 509 and WIFI AN 503. In response to the UE context, UE 501 streams video content from the video server (not shown) over WIFI AN 503, IWF 509, and UPF 514.

After switching to wireless network slice 508, WIFI AN 503 measures the current downlink data throughput level. WIFI AN 503 applies the downlink data throughput level to the downlink data throughput threshold per the radio signal rules for wireless network slice 507. WIFI AN 503 determines that the measured downlink data throughput level for UE 501 now meets or exceeds the downlink data throughput threshold for slice 507, and in response, WIFI AN 503 signals AMF 510 over IWF 509 to switch UE 501 from wireless network slice 508 back to wireless network slice 507. To switch back to wireless network slice 507, AMF 510 and SMF 512 interact to develop UE context for UE 501 like network addresses and quality-of-service for wireless network slice 507. SMF 512 transfers some of the UE context to UPF 513 in wireless network slice 507. AMF 510 transfers some of the UE context to IWF 509. AMF 510 transfers some of the UE context to WIFI AN 503 over IWF 509. AMF 510 also transfers some of the UE context to UE 501 over IWF 509 and WIFI AN 503. In response to the UE context, UE 501 again streams video content from the video server (not shown) over WIFI AN 503, IWF 509, and UPF 513.

In a fourth example, UE 501 executes an atmospheric sensor application that will use wireless network slice 507. In response, UE 501 requests wireless network slice 507 from AMF 510 over SAT AN 504, SAT GND 505, and IWF 509. AMF 510 retrieves UE information for UE 501 from UDM 511. AMF 510 and SMF 512 interact to develop UE context for UE 501 like network addresses and quality-of-service for wireless network slice 507. SMF 512 transfers some of the UE context to UPF 513 in wireless network slice 507. AMF 510 transfers some of the UE context to IWF 509. AMF 510 transfers some of the UE context to SAT AN 504 over IWF 509 and SAT GND 505. AMF 510 transfers some of the UE context to UE 501 over IWF 509, SAT GND 505, and SAT AN 504. SAT AN 504 retrieves radio signal rules and parameters for wireless network slice 507 from its internal data structure. In response to the UE context, UE 501 transfers atmospheric readings to an Internet-of-Things (IoT) server (not shown) over SAT AN 504, SAT GND 505, IWF 509, and UPF 513.

UE 501 measures RSRP and reports the RSRP level to SAT AN 504. SAT AN 504 applies the RSRP level to the RSRP threshold per the radio signal rules for wireless network slice 507. SAT AN 504 determines that the measured RSRP level from UE 501 falls below the RSRP threshold, and in response, SAT AN 504 signals AMF 510 over SAT GND 505 and IWF 509 to switch UE 501 from wireless network slice 507 to wireless network slice 508.

AMF 510 and SMF 512 interact to develop UE context for UE 501 like network addresses and quality-of-service for wireless network slice 508. SMF 512 transfers some of the UE context to UPF 514 in wireless network slice 508. AMF 510 transfers some of the UE context to IWF 509. AMF 510 transfers some of the UE context to SAT AN 504 over IWF 509 and SAT GND 505. AMF 510 also transfers some of the UE context to UE 501 over IWF 509, SAT GND 505, and SAT AN 504. In response to the UE context, UE 501 transfers the atmospheric readings to the IoT server (not shown) over and SAT AN 504, SAT GND 505, IWF 509, and UPF 514. SAT AN 504 also retrieves the radio signal rules and parameters for wireless network slice 508 from its internal data structure.

After switching to wireless network slice 508, UE 501 measures and reports the current RSRP level to SAT AN 504. SAT AN 504 applies the RSRP level to the RSRP threshold per the radio signal rules for wireless network slice 508. SAT AN 504 determines that the measured RSRP level from UE 501 falls below the RSRP threshold for slice 508, and in response, SAT AN 504 signals AMF 510 to switch UE 501 from wireless network slice 508 to a new wireless network slice (not shown).

To switch to the new wireless network slice (not shown), AMF 510 and SMF 512 interact to develop UE context for UE 501 like network addresses and quality-of-service for the new wireless network slice. SMF 512 transfers some of the UE context to the new wireless network slice. AMF 510 transfers some of the UE context to IWF 509. AMF 510 transfers some of the UE context to SAT AN 504 over IWF 509 and SAT GND 505. AMF 510 also transfers some of the UE context to UE 501 over IWF 509, SAT GND 505, and SAT AN 504. In response to the UE context, UE 501 transfers atmospheric data to the IoT server over SAT AN 504, SAT GND 505, IWF 509, and the new wireless network slice (not shown).

Before changing the slice and possibly the RAT in the above examples, ANs 502-504 and UE 501 could apply a time delay (hysteresis time) to allow the radio signal levels to settle and avoid the rapid back and forth switching of slices and RATs due to rapidly changing radio signal levels.

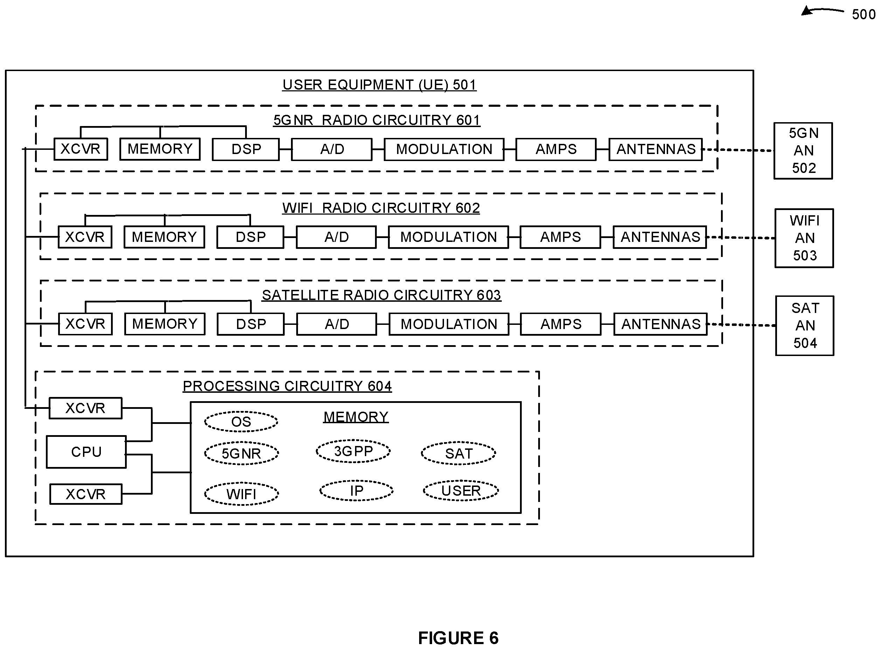

Figure 6 illustrates exemplary UE 501 in wireless communication network 500 that uses wireless network slices 507-508 based on radio signal levels. UE 501 comprises an example of wireless communication device 101 and processing circuitry 400, although device 101 and circuitry 400 may differ. UE 501 comprises Fifth Generation New Radio (5GNR) radio circuitry 601, Wireless Fidelity (WIFI) radio circuitry 602, satellite radio circuitry 603, and processing circuitry 604. Radio circuitry 601-603 comprises antennas, amplifiers, filters, modulation, analog-to-digital interfaces, DSPs, memories, and transceivers (XCVRs) that are coupled over bus circuitry. Processing circuitry 604 comprises one or more CPUs, one or more memories, and one or more transceivers that are coupled over bus circuitry. The one or more memories in processing circuitry 604 store software like an Operating System (OS), 5GNR Application (5GNR), 3GPP Application (3GPP), WIFI Application (WIFI), Satellite Application (SAT), and Internet Protocol application (IP). The antennas in radio circuitry 601-603 exchange wireless signals with ANs 502-504. Transceivers in radio circuitry 601-603 are coupled to transceivers in processing circuitry 604. In processing circuitry 604, the one or more CPUs retrieve the software from the one or more memories and execute the software to direct the operation of UE 501 as described herein. In particular, the PHY in the 5GNR application measures the radio signal levels, and the RRC in the 5GNR application transfers the radio signal levels to ANs 502-504 as described herein. In some examples, the RRC in UE 501 applies wireless signal levels to wireless signal parameters based on wireless signal rules to direct slice and RAN switches as described herein.

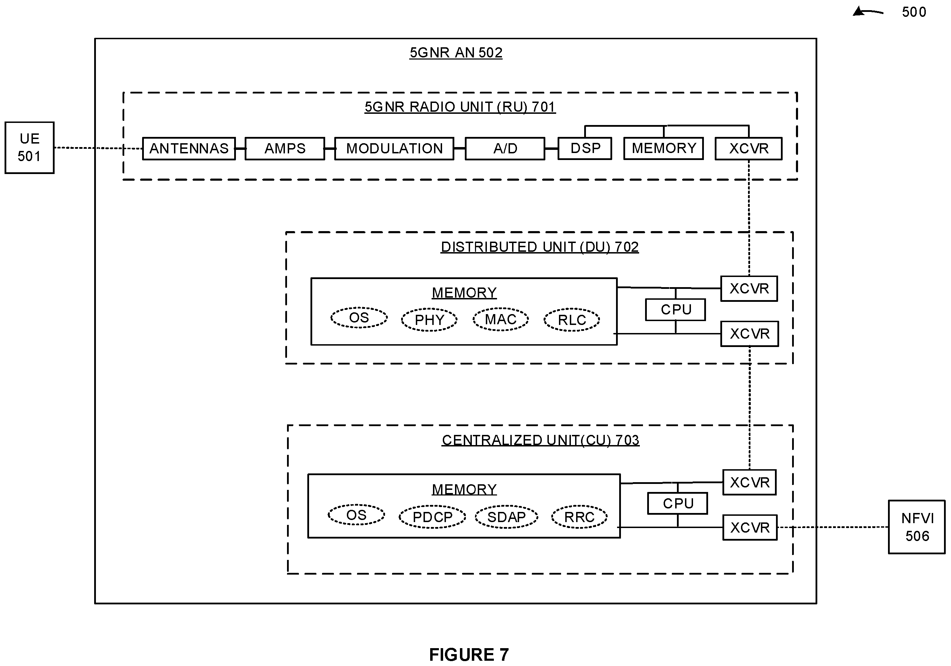

Figure 7 illustrates exemplary Fifth Generation New Radio (5GNR) access node 502 in wireless communication network 500 that uses wireless network slices 507-508 based on radio signal levels. 5GNR AN 502 comprises an example of radio communication system 102, network control system 103, and processing circuitry 400, although systems 102-103 and circuitry 400 may differ. 5GNR AN 504 comprises 5GNR Radio Unit (RU) 701, Distributed Unit (DU) 702, and Centralized Unit (CU) 703. 5GNR RU 701 comprises antennas, amplifiers, filters, modulation, analog-to-digital interfaces, DSP, memory, radio applications, and transceivers that are coupled over bus circuitry. DU 702 comprises memory, CPU, user interfaces and components, and transceivers that are coupled over bus circuitry. The memory in DU 702 stores operating system and 5GNR network applications for Physical Layer (PHY), Media Access Control (MAC), and Radio Link Control (RLC). CU 703 comprises memory, CPU, and transceivers that are coupled over bus circuitry. The memory in CU 703 stores an operating system and 5GNR network applications for Packet Data Convergence Protocol (PDCP), Service Data Adaption Protocol (SDAP), and Radio Resource Control (RRC). The antennas in 5GNR RU 701 are wirelessly coupled to UEs 501-503 over 5GNR links. Transceivers in 5GNR RU 701 are coupled to transceivers in DU 702. Transceivers in DU 702 are coupled to transceivers in CU 703. Transceivers in CU 703 are coupled to transceivers in NFVI 506. The DSP and CPU in RU 701, DU 702, and CU 703 execute the radio applications, operating systems, and network applications to exchange data and signaling between UE 501 and NFVI 506 as described herein. In particular, the RRC in CU 703 applies the radio signal rules and the radio signal parameters as described herein.

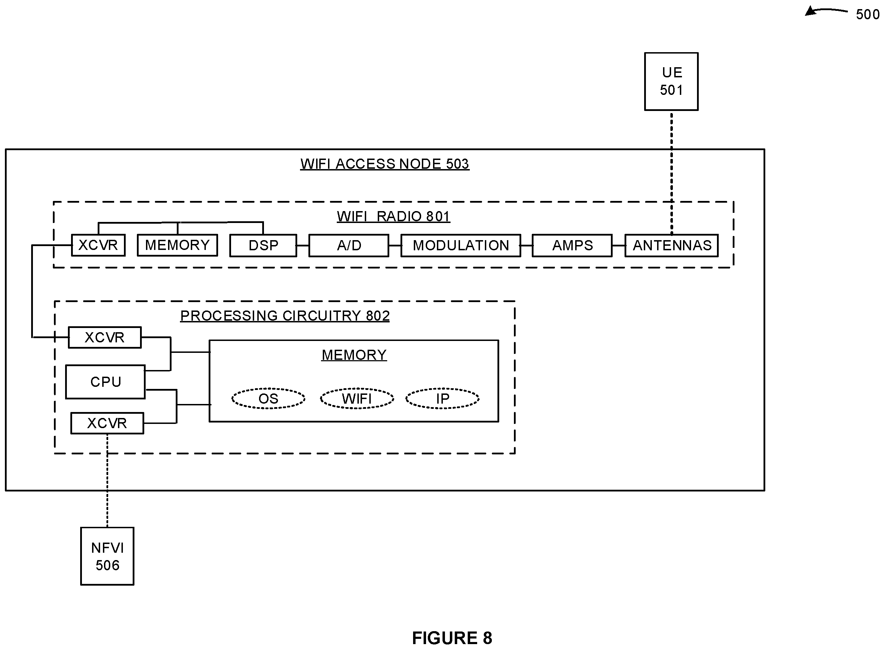

Figure 8 illustrates exemplary Wireless Fidelity (WIFI) access node 503 in wireless communication network 500 that uses wireless network slices 507-508 based on radio signal levels. WIFI AN 503 comprises an example of radio communication system 102, network control system 103, and processing circuitry 400, although systems 102-103 and circuitry 400 may differ. WIFI AN 505 comprises WIFI radio 801 and processing circuitry 802. Radio 801 comprises antennas, amplifiers, filters, modulation, analog-to-digital interfaces, DSPs, memories, and transceivers that are coupled over bus circuitry. Processing circuitry 802 comprises one or more CPUs, one or more memories, and one or more transceivers that are coupled over bus circuitry. The one or more memories in processing circuitry 802 store software like an Operating System (OS), WIFI application (WIFI), and IP application (IP). The antennas in WIFI radio 801 exchange WIFI signals with UE 501. Transceivers in radio 801 are coupled to transceivers in processing circuitry 802. Transceivers in processing circuitry 802 are coupled to transceivers in NFVI 506. In processing circuitry 802, the one or more CPUs retrieve the software from the one or more memories and execute the software to exchange data and signaling between UE 501 and NFVI 506 as described herein. In particular, the WIFI software applies the radio signal rules and the radio signal parameters as described herein.

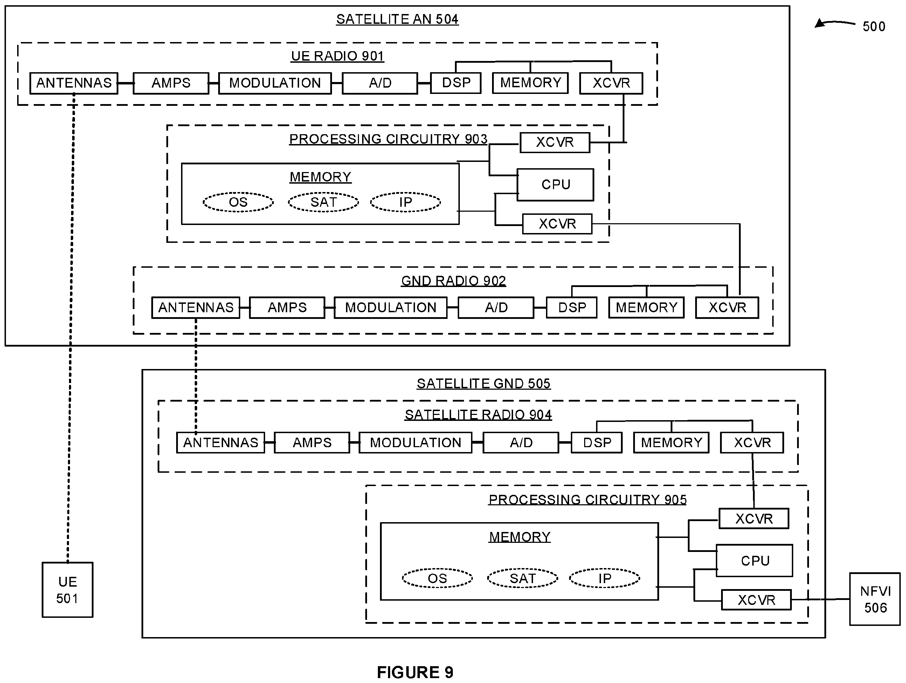

Figure 9 illustrates exemplary satellite access node (SAT AN) 503 and ground station (SAT GND) 504 in wireless communication network 500 that uses wireless network slices 507-508 based on radio signal levels. SAT AN 504 and SAT GND 504 comprise examples of radio communication system 102, network control system 103, and processing circuitry 400, although systems 102-103 and circuitry 400 may differ. SAT AN 506 comprises UE radio 901, GND radio 902 and processing circuitry 903. SAT GND 507 comprises satellite radio 904 and processing circuitry 905. Radios 901-902 and 904 comprise antennas, amplifiers, filters, modulation, analog-to-digital interfaces, DSPs, memories, and transceivers that are coupled over bus circuitry. Processing circuitry 903 and 905 comprise one or more CPUs, one or more memories, and one or more transceivers that are coupled over bus circuitry. The one or more memories in processing circuitry 903 and 905 store software like an Operating System (OS), Satellite Application (SAT), and IP Application (IP). The antennas in UE radio 901 exchange satellite signals with UE 501. Transceivers in UE radio 901 are coupled to transceivers in processing circuitry 903. Transceivers in processing circuitry 903 are coupled to transceivers in GND radio 902. The antennas in GND radio 902 exchange satellite signals with antennas in satellite radio 904, and the antennas in satellite radio 904 exchange the satellite signals with GND radio 902. Transceivers in satellite radio 904 are coupled to transceivers in processing circuitry 905. Transceivers in processing circuitry 905 are coupled to transceivers in NFVI 506. In processing circuitry 903 and 905, the one or more CPUs retrieve the software from the one or more memories and execute the software to exchange data and signaling between UE 501 and NFVI 506 as described herein. In particular, the SAT software in SAT AN 504 applies the radio signal rules and the radio signal parameters as described herein.

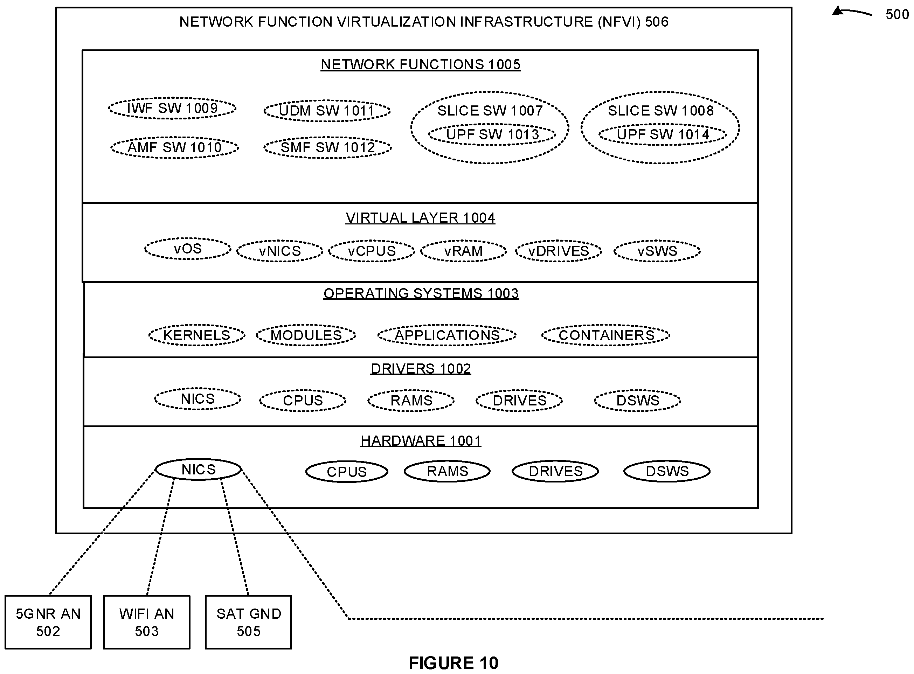

Figure 10 illustrates exemplary Network Function Virtualization Infrastructure (NFVI) 506 in wireless communication network 500 that uses wireless network slices 507-508 based on radio signal levels. NFVI 506 comprises an example of data communication system 100 and processing circuitry 400, although system 100 and circuitry 400 may differ. NFVI 506 comprises hardware 1001, hardware drivers 1002, operating systems 1003, virtual layer 1004, and network functions 1005. Hardware 1001 comprises Network Interface Cards (NICS), CPUS, RAM, Flash/Disk Drives (DRIVES), and Data Switches (DSWS). Hardware drivers 1002 comprise software that is resident in the NICS, CPUS, RAM, DRIVES, and DSWS. Operating systems 1003 comprise kernels, modules, applications, and containers. Virtual layer 1004 comprises virtual Operating Systems (vOS), vNICS, vCPUS, vRAM, vDRIVES, and vSWS. Network Functions 1005 comprises slice software (SW) 1007, slice SW 1008, IWF SW 1009, AMF SW 1010, UDM SW 1011, and SMF SW 1012. Slice SW 1007 comprises UPF SW 1013. Slice SW 1008 comprises UPF SW 1014. The NICS in hardware 1001 are coupled to ANs 502-503, SAT GND 505, and external systems. Hardware 1001 executes hardware drivers 1002, operating systems 1003, virtual layer 1004, and network functions 1005 to form and operate IWF 509, AMF 510, UDM 511, SMF 512, UPF 513, and UPF 514 as described herein. NFVI 506 comprises one or more microprocessors and one or more non-transitory machine-readable storage media that store processing instructions that direct NFVI 506 to exchange data and signaling between ANs 502-503, SAT GND 505, and external systems as described herein. NFVI 506 may be located at a single site or be distributed across multiple geographic locations. In particular, UDM 511 and AMF 510 may serve radio signal rules and parameters for wireless network slices as described herein.

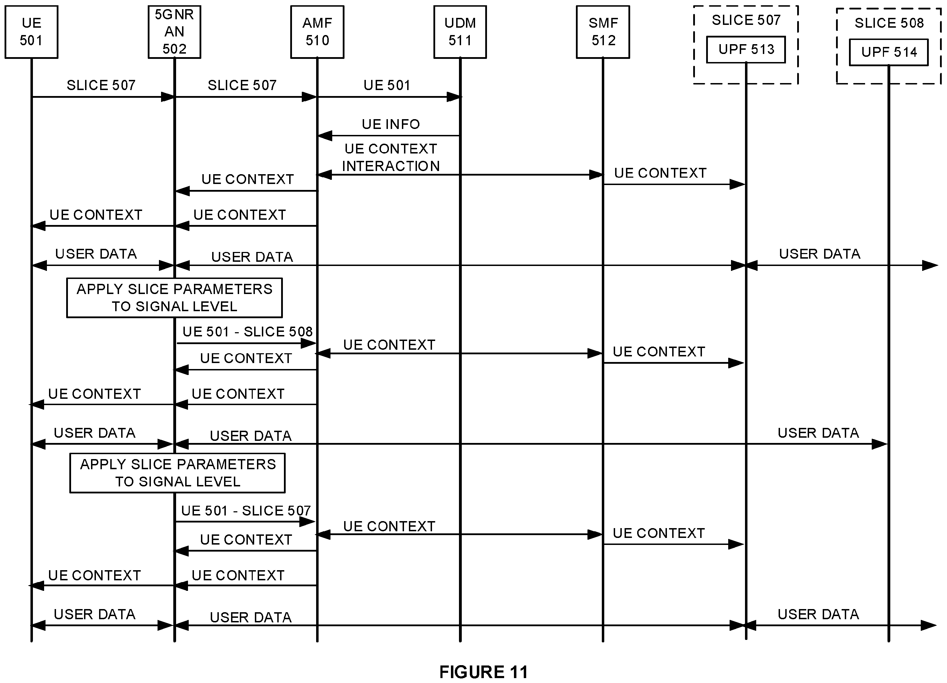

Figure 11 illustrates an exemplary operation of wireless communication network 500 that uses wireless network slices 507-508 based on radio signal levels. The operation may differ in other examples. UE 501 requests wireless network slice (SLICE) 507 from AMF 510 over 5GNR AN 502. AMF 510 retrieves UE information (INFO) for UE 501 from UDM 511. The UE information may indicate radio signal rules and parameters for wireless network slice 507. AMF 510 and SMF 512 interact to develop UE context for UE 501 like network addresses and quality-of-service for wireless network slice 507. SMF 512 transfers some of the UE context to UPF 513 in wireless network slice 507. AMF 510 transfers some of the UE context to 5GNR AN 502. AMF 510 also transfers some of the UE context to UE 501 over 5GNR AN 502. In response to the UE context, UE 501 exchanges user data with an external data system (not shown) over 5GNR AN 502 and UPF 513. For example, UE 501 may exchange keystroke and display information with an external computer that provides hosted computing to UE 501.

5GNR AN 502 typically retrieves radio signal rules and parameters for wireless network slice 507 from an internal data structure, although 5GNR AN 502 may also apply radio signal rules and parameters that arrive in the UE context from AMF 510. UE 501 measures radio signal levels like RSRP and SNR. 5GNR AN 502 may also measure radio signal levels like uplink interference and downlink throughput. 5GNR AN 502 applies the radio signal levels to radio signal parameters per the radio signal rules. The radio signal rules and parameters for wireless network slice 507 could be indicated by the UE context or the internal data structure. Based on the application of the radio signal levels to the radio signal parameters per the radio signal rules, 5GNR AN 502 signals AMF 510 to switch UE 501 from wireless network slice 507 to wireless network slice 508.

AMF 510 and SMF 512 interact to develop UE context for UE 501 like network addresses, quality-of-service, and possibly radio signal rules and parameters for wireless network slice 508. SMF 512 transfers some of the UE context to UPF 514 in wireless network slice 508. AMF 510 transfers some of the UE context to 5GNR AN 502 - possibly including radio signal rules and parameters. AMF 510 also transfers some of the UE context to UE 501 over 5GNR AN 502. In response to the UE context, UE 501 exchanges user data with wireless network slice 508 over 5GNR AN 502 and UPF 514. For example, UE 501 may now exchange keystroke and display information with an internal computer that is hosted by wireless network slice 508 and that better tolerates challenging radio signal levels.

5GNR AN 502 typically retrieves radio signal rules for wireless network slice 508 from an internal data structure, although 5GNR AN 502 may also apply radio signal rules that arrive in the UE context from AMF 510. UE 501 measures current radio signal levels and reports the current radio signal levels to 5GNR AN 502. 5GNR AN 502 may also measure radio signal levels like uplink interference and data throughput. 5GNR AN 502 applies the radio signal levels to the radio signal parameters per the radio signal rules. The radio signal rules and parameters for wireless network slices 507-508 could be indicated by the UE context or the internal data structure. Based on the application of the radio signal levels to the radio signal parameters per the radio signal rules, 5GNR AN 502 signals AMF 510 to switch UE 501 from wireless network slice 508 back to wireless network slice 507. Alternatively, 5GNR AN 502 may have signaled AMF 510 to switch UE 501 from wireless network slice 508 to another wireless network slice (not shown).

AMF 510 and SMF 512 interact to develop UE context for UE 501 like network addresses and quality-of-service for wireless network slice 507. SMF 512 transfers some of the UE context to UPF 513 in wireless network slice 507. AMF 510 transfers some of the UE context to 5GNR AN 502. AMF 510 also transfers some of the UE context to UE 501 over 5GNR AN 502. In response to the UE context, UE 501 exchanges user data with the external data system (not shown) over 5GNR AN 502 and UPF 513. For example, UE 501 may again exchange keystroke and display information with the external computer over wireless network slice 507.

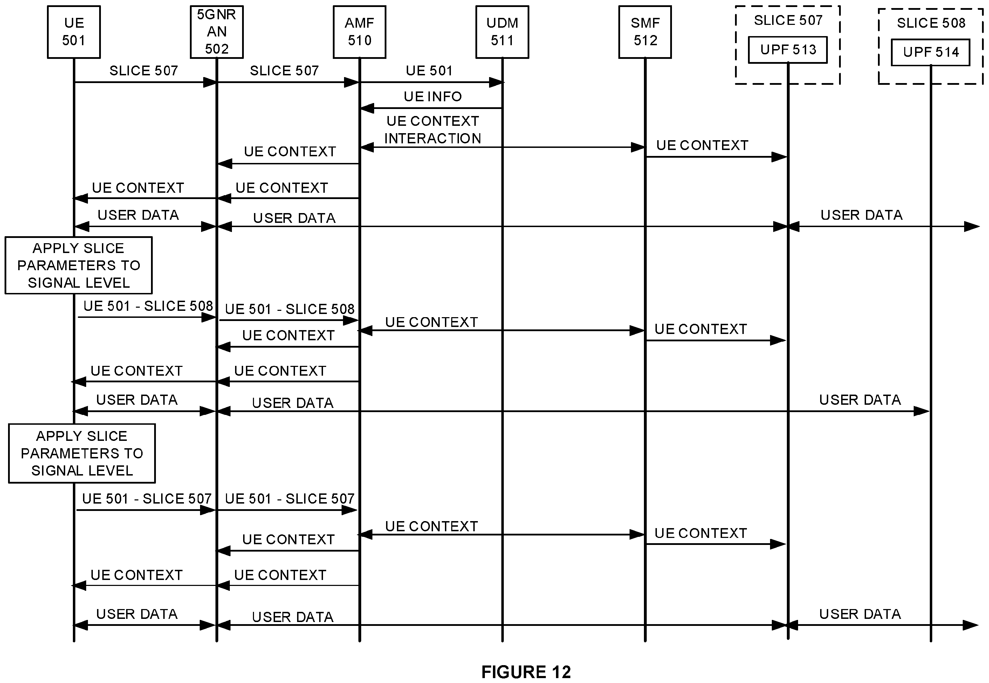

Figure 12 illustrates an alternative exemplary operation of wireless communication network 500 that uses wireless network slices 507-508 based on radio signal levels. The operation may differ in other examples. UE 501 requests wireless network slice (SLICE) 507 from AMF 510 over 5GNR AN 502. AMF 510 retrieves UE information (INFO) for UE 501 from UDM 511. The UE information may indicate radio signal rules and parameters for wireless network slice 507. AMF 510 and SMF 512 interact to develop UE context for UE 501 like network addresses and quality-of-service for wireless network slice 507. SMF 512 transfers some of the UE context to UPF 513 in wireless network slice 507. AMF 510 transfers some of the UE context to 5GNR AN 502. AMF 510 also transfers some of the UE context to UE 501 over 5GNR AN 502, and this UE context includes radio signal rules and parameters for wireless network slice 507. In response to the UE context, UE 501 exchanges user data with an external data system (not shown) over 5GNR AN 502 and UPF 513. For example, UE 501 may exchange location and display data over wireless network slice 507 with a navigation server that provides geographic directions to UE 501.

UE 501 measures radio signal levels like RSRP and SNR. UE 501 applies the radio signal levels to radio signal parameters per the radio signal rules. Based on the application of the radio signal levels to the radio signal parameters per the radio signal rules, UE 501 signals AMF 510 to switch UE 501 from wireless network slice 507 to wireless network slice 508.

AMF 510 and SMF 512 interact to develop UE context for UE 501 like network addresses, quality-of-service, and possibly radio signal rules and parameters for wireless network slice 508. SMF 512 transfers some of the UE context to UPF 514 in wireless network slice 508. AMF 510 transfers some of the UE context to 5GNR AN 502. AMF 510 also transfers some of the UE context to UE 501 over 5GNR AN 502. In response to the UE context, UE 501 exchanges user data with wireless network slice 508 over 5GNR AN 502 and UPF 514. For example, UE 501 may now exchange location and display data with a navigation server in wireless network slice 508 that provides geographic directions and that better tolerates challenging radio signal levels.

UE 501 measures current radio signal levels and reports the current radio signal levels to 5GNR AN 502. UE 501 applies the radio signal levels to the radio signal parameters per the radio signal rules. Based on the application of the radio signal levels to the radio signal parameters per the radio signal rules, UE 501 signals AMF 510 to switch UE 501 from wireless network slice 508 back to wireless network slice 507. Alternatively, UE 501 may have signaled AMF 510 to switch UE 501 from wireless network slice 508 to another wireless network slice (not shown).

AMF 510 and SMF 512 interact to develop UE context for UE 501 like network addresses and quality-of-service for wireless network slice 507. SMF 512 transfers some of the UE context to UPF 513 in wireless network slice 507. AMF 510 transfers some of the UE context to 5GNR AN 502. AMF 510 also transfers some of the UE context to UE 501 over 5GNR AN 502. In response to the UE context, UE 501 exchanges user data with the external data system (not shown) over 5GNR AN 502 and UPF 513. For example, UE 501 may again exchange location and display data over wireless network slice 507 with a navigation server (not shown) that provides geographic directions.

Advantageously, wireless communication network 500 effectively uses the radio signal levels to control the use of wireless network slices 507-508. Moreover, wireless communication network 500 efficiently handsover UE 501 between wireless network slices 507-508.

The wireless communication system circuitry described above comprises computer hardware and software that form special-purpose data communication circuitry to use wireless network slices based on radio signal levels. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose data communication circuitry system to use wireless network slices based on radio signal levels.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. Thus, the invention is not limited to the specific embodiments described above, but only by the following claims and their equivalents.

## Claims

1. A method comprising:
selecting an original wireless network slice for a wireless communication device;
identifying one or more radio signal parameters for the original wireless network slice;
determining one or more radio signal levels for the wireless communication device; and
using a different wireless network slice for the wireless communication device in response to the one or more radio signal parameters for the original wireless network slice and the one or more radio signal levels for the wireless communication device.

2. The method of claim 1 comprising:
determining subsequent one or more radio signal levels for the wireless communication device; and
using the original wireless network slice for the wireless communication device in response to the one or more radio signal parameters for the original wireless network slice and the one or more subsequent radio signal levels for the wireless communication device.

3. The method of claim 1 wherein:
identifying the one or more radio signal parameters for the original wireless network slice comprises identifying one or more Reference Signal Received Power (RSRP) parameters for the original wireless network slice;
determining the one or more radio signal levels for the wireless communication device comprises determining one or more RSRP levels for the wireless communication device; and
using the different wireless network slice for the wireless communication device in response to the one or more radio signal parameters for the original wireless network slice and the one or more radio signal levels for the wireless communication device comprises using the different wireless network slice for the wireless communication device in response to the one or more RSRP parameters for the original wireless network slice and the one or more RSRP levels for the wireless communication device.

4. The method of claim 1 wherein:
identifying the one or more radio signal parameters for the original wireless network slice comprises identifying one or more Signal-to-Noise Ratio (SNR) parameters for the original wireless network slice;
determining the one or more radio signal levels for the wireless communication device comprises determining one or more SNR levels for the wireless communication device; and
using the different wireless network slice for the wireless communication device in response to the one or more radio signal parameters for the original wireless network slice and the one or more radio signal levels for the wireless communication device comprises using the different wireless network slice for the wireless communication device in response to the one or more SNR parameters for the original wireless network slice and the one or more SNR levels for the wireless communication device.

5. The method of claim 1 wherein:
identifying the one or more radio signal parameters for the original wireless network slice comprises identifying one or more data throughput parameters for the original wireless network slice;
determining the one or more radio signal levels for the wireless communication device comprises determining one or more data throughput levels for the wireless communication device; and
using the different wireless network slice for the wireless communication device in response to the one or more radio signal parameters for the original wireless network slice and the one or more radio signal levels for the wireless communication device comprises using the different wireless network slice for the wireless communication device in response to the one or more data throughput parameters for the original wireless network slice and the one or more data throughput levels for the wireless communication device.

6. The method of claim 1 further comprising:
identifying the one or more radio signal parameters for the original wireless network slice comprises identifying the one or more radio signal parameters for a first Radio Access Technology (RAT);
determining the one or more radio signal levels for the wireless communication device comprises determining the one or more radio signal levels for the first RAT; and
using the different wireless network slice for the wireless communication device comprises using a second RAT.

7. The method of claim 1 wherein:
selecting the original wireless network slice for the wireless communication device comprises the wireless communication device selecting the original wireless network slice;
identifying the one or more radio signal parameters for the original wireless network slice comprises the wireless communication device identifying the one or more radio signal parameters for the original wireless network slice;
determining the one or more radio signal levels for the wireless communication device comprises the wireless communication device determining the one or more radio signal levels; and
using the different wireless network slice for the wireless communication device comprises the wireless communication device using the different wireless network slice.

8. A data communication system comprising:
a network control system to select an original wireless network slice for a wireless communication device;
the network control system to identify one or more radio signal parameters for the original wireless network slice;
a radio communication system to determine one or more radio signal levels for the wireless communication device; and
the network control system to select a different wireless network slice for the wireless communication device in response to the one or more radio signal parameters for the original wireless network slice and the one or more radio signal levels for the wireless communication device.

9. The data communication system of claim 8 further comprising:
the radio communication system to determine one or more subsequent radio signal levels for the wireless communication device;
the network control system to re-select the original wireless network slice for the wireless communication device in response to the one or more radio signal parameters for the original wireless network slice and the one or more subsequent radio signal levels for the wireless communication device.

10. The data communication system of claim 8 wherein:
the one or more radio signal parameters for the original wireless network slice comprise one or more Reference Signal Received Power (RSRP) parameters for the original wireless network slice; and
the one or more radio signal levels for the wireless communication device comprise one or more RSRP levels for the wireless communication device.

11. The data communication system of claim 8 further comprising:
the one or more radio signal parameters for the original wireless network slice comprise one or more Signal-to-Noise Ratio (SNR) parameters for the original wireless network slice; and
the one or more radio signal levels for the wireless communication device comprise one or more SNR levels for the wireless communication device.

12. The data communication system of claim 8 wherein the network control system and the radio communication system comprise a Fifth Generation New Radio (5GNR) access node.

13. The data communication system of claim 8 wherein the network control system and the radio communication system comprise a satellite-based access node.

14. The data communication system of claim 8 wherein the network control system and the radio communication system comprise a Wireless Fidelity (WIFI) access node.

15. The data communication system of claim 8 wherein:
the network control system comprises a Radio Resource Controller (RRC) in a wireless access node; and
the radio communication system comprises a Physical Layer (PHY) in the wireless access node.
